# EUROPÄISCHE PATENTSCHRIFT

(11) **EP 1 817 986 B1**
(45) Veröffentlichungstag und Bekanntmachung des Hinweises auf die Patenterteilung: **03.03.2010**
(21) Anmeldenummer: 07450008.3
(22) Anmeldetag: 23.01.2007
(51) Int. Cl.: A01N 25/34, A01N 59/16, A47C 27/00, A01N 33/08, A01N 33/04, A01N 43/40, A01P 1/00

(54) **Matratze**
Mattress
Matelas

(30) Priorität: 09.02.2006 AT 1972006
(43) Veröffentlichungstag der Anmeldung: 15.08.2007
(73) Patentinhaber: Sembella Gmbh, A 4850 Timelkam (AT); WENATEX-DAS Schlafsystem Forschung- Beratung und Entwicklung GmbH, 5020 Salzburg (AT)
(72) Erfinder: Karl Rametsteiner, A 4040 Linz (AT)
(74) Vertreter: Hübscher, Helmut

(56) Entgegenhaltungen:
- EP-A- 1 486 523
- US-A- 4 937 273
- DATABASE EPODOC [Online] EUROPEAN PATENT OFFICE, THE HAGUE, NL; XP002475430 & JP 10 114812 A (BRIDGESTONE) 6. Mai 1998 (1998-05-06) -& DATABASE WPI Week 199828 Derwent Publications Ltd., London, GB; AN 1998-316779 XP002475434 & JP 10 114812 A (BRIDGESTONE CORP) 6. Mai 1998 (1998-05-06)
- DATABASE WPI Week 199140 Derwent Publications Ltd., London, GB; AN 1991-291702 XP002475435 & JP 03 193707 A (TOYO DRY ROOVE KK) 23. August 1991 (1991-08-23) -& DATABASE EPODOC [Online] EUROPEAN PATENT OFFICE, THE HAGUE, NL; XP002475431 & JP 03 193707 A 23. August 1991 (1991-08-23) -& DATABASE CHEMABS [Online] CHEMICAL ABSTRACTS SERVICE, COLUMBUS, OHIO, US; XP002475432 gefunden im STN-INTERNATIONAL Database accession no. 116:53655
- DATABASE WPI Week 199001 Derwent Publications Ltd., London, GB; AN 1990-003938 XP002475436 & JP 01 286913 A (SHINAGAWA NENRYO KK) 17. November 1989 (1989-11-17) -& DATABASE EPODOC [Online] EUROPEAN PATENT OFFICE, THE HAGUE, NL; XP002475433 & JP 01 286913 A 17. November 1989 (1989-11-17)

## Beschreibung

Die Erfindung bezieht sich auf eine Matratze aus einem Polyurethan-Weichschaum mit einer bioziden Ausrüstung auf der Basis eines silberhältigen Zeoliths.

Matratzen bilden aufgrund der Umwelteinflüsse vor allem hinsichtlich der Temperatur und Feuchtigkeitsverhältnisse günstige Nährböden für Mikro- und Kleinorganismen, so daß es an sich naheliegt, Matratzen biozid auszurüsten. Zu diesem Zweck ist es bekannt, eine Imprägnierung mit ätherischen Ölen oder mikrobiozid wirkenden Phenolen, Chlorphenolderivaten oder Isothiazolen vorzunehmen. Außerdem wurden Zusätze von formaldehydabspaltenden Agentien, wie Dimethylolhydantoin, oder Kupfer- bzw. Zinksalze mit bakteriostatischer und fungizider Wirkung vorgeschlagen. Allen diesen bekannten Maßnahmen ist gemeinsam, daß sie toxische und/oder flüchtige Verbindungen einsetzen.

Schließlich sind bakterizid und auch fungizid wirksame Zusammensetzungen auf der Basis eines Zeoliths, insbesondere eines Zinkzeoliths, bekannt (EP 1 044 610 A1), das als Träger für Silber in elementarer Form oder als Silberoxid dient. Diese Zusammensetzungen können als feinteilige Pulver gegebenenfalls mit einem Dispergiermittel insbesondere in Kunststoffasern eingearbeitet werden und behalten dort ihre bakterizide und fungizide Wirkung, so daß nach einer Ausrüstung solcher Fasern mit einem silberhältigen Zeolith in einer Menge von 0,1 bis 5 Gewichts% bei einem Silbergehalt von 0,1 bis 3 Gewichts% an der Gesamtmenge der Oberflächenbesatz beispielsweise einer aus den Fasern hergestellten textilen Warenbahn mit grampositiven bzw. gramnegativen Bakterien dauerhaft reduziert werden konnte, allerdings nicht in einem Ausmaß, wie es bei einer bioziden Ausrüstung einer Matratze vorteilhaft wäre.

EP-A-1486523 beschreibt flexible Polyurethanschäume für u.a. Matratzen, die metallhaltige Zeolithe, Amine und aminische Katalysatoren enthalten.
US4937273 beschreibt flexible Polyurethanschäume für u.a. Matratzen, die metallhaltige Zeolithe und aminische Katalysatoren enthalten.

Der Erfindung liegt somit die Aufgabe zugrunde, eine Matratze aus einem Polyurethan-Weichschaum auf der Basis eines silberhältigen Zeoliths so auszurüsten, daß die biozide Wirkung erheblich gesteigert werden kann.

Die Erfindung löst die gestellte Aufgabe dadurch, daß der Polyurethan-Weichschaum neben 0,1 bis 5 Gewichts% eines silberhältigen Zeoliths 0,1 bis 2 Gewichts% eines Bis (Dimethylaminoäthyl) äthers als wenigstens ein tertiäres Amin enthält.

Es hat sich in überraschender Weise herausgestellt, daß durch die Zugabe von 0,1 bis 2 Gewichts% eines Bis (Dimethylaminoäthyl) äthers neben dem hiefür an sich bekannten Einsatz eines silberhältigen Zeoliths die biozide Wirkung dieser Ausrüstung im Vergleich zu einer allein auf einem silberhältigen Zeolith beruhenden Ausrüstung um das Zehn- bis Hundertfache gesteigert werden konnte. Dies ist auch deshalb erstaunlich, weil zwar für quaternäre Ammoniumverbindungen, wie Dodecyltrimethylammoniumhalogenid, eine bakterizide Wirkung bekannt war, nicht aber für tertiäre Amine.

Besonders vorteilhafte Voraussetzungen für die Entfaltung einer bakteriziden Wirkung ergeben sich, wenn Bis(Dimethylaminoäthyl)äther eingesetzt wird.

Um das silberhältige Zeolith zusammen mit dem tertiären Amin in die Matrix des Polyurethan-Weichschaums einzubauen, kann in herkömmlicher Weise eine Polyolkomponente mit einer Isocyanatkomponente unter Einwirkung eines Treibmittels in einer Polyaddition zu einem Polyurethan-Weichschaum umgesetzt werden. Es ist lediglich der Polyolkomponente ein Gemisch aus 0,1 bis 5 Gewichts% eines silberhältigen Zeoliths und 0,1 bis 2 Gewichts% eines Bis (Dimethylaminoälkyl) äthers als wenigstens ein tertiärs Amin vor der Reaktion mit der Isocyanatkomponente beizufügen, um einen Polyurethan-Weichschaum mit einer erfindungsgemäßen bioziden Ausrüstung als Kern einer Matratze zu erhalten. Dabei ergibt sich der Vorteil, daß das tertiäre Amin katalysierend auf die Polyaddition zwischen der Polyolkomponente und der Isocyanatkomponente in der Polyurethansynthese wirken, so daß sonst hiefür eingesetzte Zinnverbindungen zumindest teilweise reduziert werden können.

In einem Vergleichstest wurden Matratzen aus einem Polyurethan-Weichschaum ohne biozide Ausrüstung (Probe 1), mit einer bioziden Ausrüstung auf Basis eines silbehältigen Zeoliths (Probe 2) und mit einer erfindungsgemäßen Ausrüstung auf der Basis eines silbehältigen Zeoliths in Verbindung mit einem tertiären Amin (Probe 3) in einer definierten Suspension der Mikroorganismen getränkt und die Konzentration der Mikroorganismen jeweils unmittelbar nach der Tränkung und nach einem Zeitintervall von 12 Stunden gemessen. Als Zeolith kam eine Verbindung der Formel Na₂O.Al₂O₃.6SiO₂.xH₂O (x = 2 - 6) zum Einsatz, wobei 0,1 bis 0,5 Gewichts% des Na₂O durch Ag₂O ersetzt waren.

Für eine Suspension aus Staphylococcus aureus mit einer Konzentration von 1,1 x 10⁵ KBE/ml (koloniebildende Einheiten je ml) ergaben sich nach einer Zeitspanne von 12 h ab der Tränkung für die Probe 1 eine Konzentration von 8,9 x 10⁶ KBE/ml, für die Probe 2 bei einem Zeolithanteil von 0,5 Gewichts% eine Konzentration von 4,8 x 10⁵ KBE/ml und für die Probe 3 bei einem gleichen Zeolithanteil von 0,5 Gewichts% eine Konzentration von 4,6 x 10⁴ KBE/ml mit 0,5 Gewichts% eines Dimethylcyclohexylamins als tertiäres Amin (Vergleichsbeispiel, nicht unter den Umfang der Ansprüche fallend), eine Konzentration von 2,5 x 10⁴ KBE/ml mit 0,5 Gewichts% eines Diazabicyclooctans als tertiäres Amin (Vergleichsbeispiel, nicht unter den Umfang der Ansprüche fallend) und eine Konzentration von 2,2 x 10³ KBE/ml mit 0,5 Gewichts% eines Bis(Dimethylaminoäthyl)äther als tertiäres Amin. Bei einer Steigerung des Gehaltes des Zeolithanteils auf 0,7 Gewichts% konnten die Konzentrationen nach 12 h für die Probe 2 mit 1,1 x 10⁵ KBE/ml und für die Probe 3 mit 1,5 x 10³ KBE/ml bei einem Gehalt von 0,5 Gewichts% eines Gemisches aus Diazabicyclooctan und aus Bis(Dimethylaminoäthyl)äther im Gewichtsverhältnis 1 : 1, mit 3,7 x 10³ KBE/ml bei einem Gehalt von 0,5 Gewichts% eines Diazabicyclooctans (Vergleichsbeispiel, nicht unter den Umfang der Ansprüche fallend) und mit 6,5 x 10³ KBE/ml bei einem Gehalt von 0,5 Gewichts% eines Bis(Dimethylaminoäthyl)äthers als tertiäres Amin bestimmt werden.

Für eine Suspension aus Escherichia coli mit einer Konzentration von 1,15 x 10⁵ KBE/ml ergaben sich nach einer Zeitspanne von 12 h ab der Tränkung ähnlich Verhältnisse: Es wurden für die Probe 1 eine Konzentration von 8,5 x 10⁶ KBE/ml, für die Probe 2 bei einem Zeolithanteil von 0,5 Gewichts% eine Konzentration von 2,7 x 10⁴ KBE/ml und für die Probe 3 bei einem gleichen Zeolithanteil von 0,5 Gewichts% eine Konzentration von 1,5 x 10³ KBE/ml mit 0,5 Gewichts% eines Dimethylcyclohexylamins als tertiäres Amin (Vergleichsbeispiel, nicht unter den Umfang der Ansprüche fallend), eine Konzentration von 4,7 x 10² KBE/ml mit 0,5 Gewichts% eines Diazabicyclooctans (Vergleichsbeispiel, nicht unter den Umfang der Ansprüche fallend) und eine Konzentration von 8,5 x 10² KBE/ml mit 0,5 Gewichts% eines Bis(Dimethylaminoäthyl)äther als tertiäres Amin gemessen. Bei einer Steigerung des Gehaltes des Zeolithanteils auf 0,7 Gewichts% wurden die Konzentrationen nach 12 h für die Probe 2 mit 4,6 x 10³ KBE/ml und für die Probe 3 mit 2,8 x 10² KBE/ml bei einem Gehalt von 0,5 Gewichts% eines Gemisches aus Diazabicyclooctan und Bis(Dimethylaminoäthyl)äther im Gewichtsverhältnis 1 : 1, mit 50 KBE/ml bei einem Gehalt von 0,5 Gewichts% eines Diazabicyclooctans (Vergleichsbeispiel, nicht unter den Umfang der Ansprüche fallend) und mit 20 KBE/ml bei einem Gehalt von 0,5 Gewichts% eines Bis(Dimethylaminoäthyl)äthers als tertiäres Amin ermittelt.

## Patentansprüche

1. Matratze aus einem Polyurethan-Weichschaum mit einer bioziden Ausrüstung auf der Basis eines silberhältigen Zeoliths, **dadurch gekennzeichnet, daß** der Polyurethan-Weichschaum neben 0,1 bis 5 Gewichts% eines silberhältigen Zeoliths 0,1 bis 2 Gewichts% eines Bis(Dimethylaminoäthyl)äthers als wenigstens ein tertiäres Amin enthält.

2. Matratze nach Anspruch 1, **dadurch gekennzeichnet, daß** der Polyurethan-Weichschaum neben dem Bis(Dimethylaminoäthyl)äther Dimethylcyclohexylamin und/oder Diazabicyclooctan und/oder N.N-Tetramethylbutandiamin in einer Gesamtmenge von 0,1 bis 2 Gewichts% enthält.

3. Verfahren zur Herstellung einer Matratze nach Anspruch 1 oder 2, wobei eine Polyolkomponente mit einer Isocyanatkomponente unter Einwirkung eines Treibmittels in einer Polyaddition zu einem Polyurethan-Weichschaum umgesetzt wird, **dadurch gekennzeichnet, daß** der Polyolkomponente ein Gemisch aus 0,1 bis 5 Gewichts% eines silberhältigen Zeoliths und 0,1 bis 2 Gewichts% eines Bis(Dimethylaminoäthyl)äthers als wenigstens ein tertiäres Amin vor der Reaktion mit der Isocyanatkomponente beigefügt wird.

## Claims

1. Mattress made from a flexible polyurethane foam having a biocidal finish based on a silver-containing zeolite, **characterised in that**, in addition to 0.1 to 5% by weight of a silver-containing zeolite, the flexible polyurethane foam contains 0.1 to 2% by weight of a bis(dimethylaminoethyl) ether as at least one tertiary amine.

2. Mattress as claimed in claim 1, **characterised in that**, in addition to the bis(dimethylaminoethyl) ether, the flexible polyurethane foam contains dimethylcyclohexylamine and/or diazabicyclooctane and/or N,N-tetramethylbutane diamine in a total quantity of 0.1 to 2% by weight.

3. Method for producing a mattress as claimed in claim 1 or 2, wherein a polyol component is reacted with an isocyanate component under the effect of a propellant in a polyaddition to form a flexible polyurethane foam, **characterised in that** a mixture of 0.1 to 5% by weight of a silver-containing zeolite and 0.1 to 2% by weight of a bis(dimethylaminoethyl) ether as at least one tertiary amine is added to the polyol component before the reaction with the isocyanate component.

## Revendications

1. Matelas composé d'une mousse souple de polyuréthanne avec un apprêt biocide à base d'une zéolithe contenant de l'argent, **caractérisé en ce que** la mousse souple de polyuréthane contient, outre de 0,1 à 5 % en poids d'une zéolithe contenant de l'argent, de 0,1 à 2 % en poids d'un bis (diméthylaminoéthyl) éther sous forme d'au moins une amine tertiaire.

2. Matelas selon la revendication 1, **caractérisé en ce que** la mousse souple de polyuréthane contient, outre le bis(diméthylaminoéthyl)éther, une diméthylcyclohexylamine et/ou diazabicyclooctane et/ou N.N-tétraméthylbutane-diamine, en une quantité globale de 0,1 à 2 % en poids.

3. Procédé de fabrication d'un matelas selon la revendication 1 ou 2, dans lequel un composant polyol avec un composant isocyanate, sous l'effet d'un agent gonflant, en une polyaddition, est converti en une mousse souple de polyuréthane, **caractérisé en ce qu'**au composant polyol est ajouté, avant à réaction avec le composant isocyanate, un mélange composé de 0,1 à 5 en poids d'une zéolithe contenant de l'argent et de 0,1 à 2 % en poids d'un bis(diméthylaminoéthyl)éther sous forme d'au moins une amine tertiaire.
